# EUROPEAN PATENT APPLICATION

(11) **EP 4 668 534 A1**
(43) Date of publication of application: **24.12.2025**
(21) Application number: 24756185.5
(22) Date of filing: 07.02.2024
(51) Int. Cl.: H02J 7/00

(54) **CHARGING METHOD AND APPARATUS, AND ELECTRONIC DEVICE**

(30) Priority: 15.02.2023 CN 202310120230
(71) Applicant: Vivo Mobile Communication Co., Ltd., Dongguan, Guangdong 523863 (CN)
(72) Inventor: SHI, Xiaosheng, Dongguan, Guangdong 523863 (CN)
(74) Representative: Lavoix
(86) International application number: PCT/CN2024/076503
(87) International publication number: WO 2024/169812

(57) **Abstract**

This application discloses a charging method and apparatus, and an electronic device, and belongs to the field of communication technologies. The charging method includes: in a process of detecting, based on a target voltage level sequence, whether a charger supports a first fast charging protocol, when a first signal line of a charging interface of the electronic device is at a high level, configuring the first signal line as a receive signal line in a universal asynchronous receiver/transmitter UART serial port mode, and configuring a second signal line of the charging interface as a transmit signal line in the UART serial port mode; performing, when a first data packet supporting a second fast charging protocol is received from the charger within a first duration, charging according to the second fast charging protocol; and performing charging according to the first fast charging protocol when the first data packet is not received within the first duration.

## Description

### CROSS-REFERENCE TO RELATED APPLICATIONS

This application claims priority of Chinese Patent Application No. 202310120230.0 filed in China on February 15, 2023, which is incorporated herein by reference in its entirety.

### TECHNICAL FIELD

This application belongs to the field of communication technologies, and specifically, to a charging method and apparatus, and an electronic device.

### BACKGROUND

With the development of fast charging technologies, more and more mainstream fast charging protocols are emerging, especially many manufacturers have released private fast charging protocols. Chargers support different fast charging protocols and electronic devices such as mobile phones cannot be compatible with multiple fast charging protocols, so that it is difficult to achieve uniform fast charging between the chargers and the electronic devices.

As can be seen, the electronic devices in the related art have a problem of poor compatibility with fast charging protocols.

### SUMMARY

An objective of embodiments of this application is to provide a charging method and apparatus, and an electronic device, which can resolve the problem that the electronic devices in the related art have poor compatibility with fast charging protocols.

To resolve the foregoing technical problem, this application is implemented as follows.

According to a first aspect, an embodiment of this application provides a charging method, applied to an electronic device, the method including:
in a process of detecting, based on a target voltage level sequence, whether a charger supports a first fast charging protocol, when a first signal line of a charging interface of the electronic device is at a high level, configuring the first signal line as a receive signal line in a universal asynchronous receiver/transmitter UART serial port mode, and configuring a second signal line of the charging interface as a transmit signal line in the UART serial port mode;
performing, when a first data packet supporting a second fast charging protocol is received from the charger within a first duration, charging according to the second fast charging protocol; and
performing charging according to the first fast charging protocol when the first data packet is not received within the first duration.

According to a second aspect, an embodiment of this application provides a charging apparatus, applied to an electronic device, the apparatus including:
a configuration module, configured to, in a process of detecting, based on a target voltage level sequence, whether a charger supports a first fast charging protocol, when a first signal line of a charging interface of the electronic device is at a high level, configure the first signal line as a receive signal line in a universal asynchronous receiver/transmitter UART serial port mode, and configure a second signal line of the charging interface as a transmit signal line in the UART serial port mode;
a first charging module, configured to perform, when a first data packet supporting a second fast charging protocol is received from the charger within a first duration, charging according to the second fast charging protocol; and
a second charging module, configured to perform charging according to the first fast charging protocol when the first data packet is not received within the first duration.

According to a third aspect, an embodiment of this application provides an electronic device, the electronic device including a processor and a memory, the memory having a program or an instruction executable on the processor stored therein, and when the program or the instruction is executed by the processor, steps of the method according to the first aspect being implemented.

According to a fourth aspect, an embodiment of this application provides a readable storage medium, the readable storage medium having a program or an instruction stored therein, and when the program or the instruction is executed by a processor, steps of the charging method according to the first aspect being implemented.

According to a fifth aspect, an embodiment of this application provides a chip, the chip including a processor and a communication interface, the communication interface being coupled to the processor, and the processor being configured to execute a program or an instruction, to implement the method according to the first aspect.

According to a sixth aspect, an embodiment of this application provides a computer program product, the program product being stored in a storage medium, and the program product being executed by at least one processor to implement the method according to the first aspect.

In the embodiments of this application, the charger sends handshake data of the second fast charging protocol during a handshake sequence of the first fast charging protocol, specifically within the first duration after the first signal line of the charging interface is at the high level, so that the electronic device performs charging according to the second fast charging protocol after receiving the corresponding first data packet, enabling a handshake communication of the second fast charging protocol to be compatible with the first fast charging protocol during the handshake sequence process of the first fast charging protocol, that is, a single sequence process compatible with two fast charging protocols, so as to implement compatibility between the first fast charging protocol and the second fast charging protocol, thereby effectively improving compatibility of the electronic device with different fast charging protocols.

### BRIEF DESCRIPTION OF THE DRAWINGS

FIG. 1 is a block diagram of a charging architecture according to an embodiment of this application;
FIG. 2 is a flowchart I of a charging method according to an embodiment of this application;
FIG. 3 is a handshake sequence diagram of a charging method according to an embodiment of this application;
FIG. 4 is a flowchart II of a charging method according to an embodiment of this application;
FIG. 5 is a flowchart III of a charging method according to an embodiment of this application;
FIG. 6 is a structural diagram of a charging apparatus according to an embodiment of this application;
FIG. 7 is a structural diagram I of an electronic device according to an embodiment of this application; and
FIG. 8 is a structural diagram II of an electronic device according to an embodiment of this application.

### DETAILED DESCRIPTION

The technical solutions in embodiments of this application are clearly and completely described in the following with reference to the accompanying drawings in the embodiments of this application. Apparently, the described embodiments are merely some rather than all of the embodiments of this application. All other embodiments obtained by a person of ordinary skill in the art based on the embodiments of this application without making creative efforts shall fall within the protection scope of this application.

Terms "first" and "second" in the specification and claims of this application are used to distinguish similar objects, but are not used to describe a specific sequence or order. It should be understood that the terms used in such a way are interchangeable in proper circumstances, so that the embodiments of this application can be implemented in other sequences than the sequences illustrated or described herein, and the objects distinguished through "first", "second", and the like are generally of a same type and a quantity of objects are not limited, for example, a first object may be one or more than one. In addition, "and/or" in this specification and the claims represents at least one of connected objects, and a character "/" generally represents an "or" relationship between associated objects.

To facilitate understanding of a charging process of an electronic device, a charging architecture of the electronic device is first described.

In the charging process of the electronic device, information exchange between the electronic device and a charger may be implemented by using a signal line in a charging interface of the electronic device and a signal line in a charging connector of the charger.

The electronic device in this application may be understood as a terminal electronic device such as a mobile phone, a tablet computer, a notebook computer, a palmtop computer, a vehicle-mounted electronic device, a mobile Internet device (Mobile Internet Device, MID), an augmented reality (augmented reality, AR)/virtual reality (virtual reality, VR) device, a robot, a wearable device, an ultra-mobile personal computer (Ultra-Mobile Personal Computer, UMPC), a netbook, or a personal digital assistant (Personal Digital Assistant, PDA). The charger in this application may be understood as a charging device that can charge the foregoing terminal electronic device.

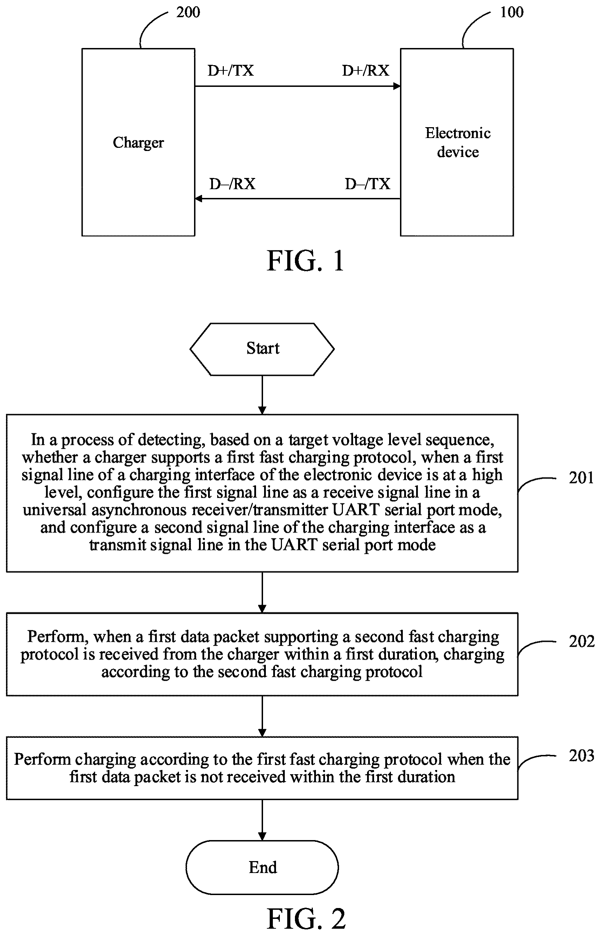

Referring to FIG. 1, FIG. 1 is a block diagram of a charging architecture according to an embodiment of this application. As shown in FIG. 1, the charging architecture includes an electronic device 100 and a charger 200. A charging interface of the electronic device 100 may be a universal serial bus (Universal Serial Bus, USB) interface, and a signal line of the USB interface may be defined as a USB data positive signal line (that is, a D+ signal line) and a USB data negative signal line (that is, a D- signal line). Correspondingly, a charging connector of the charger 200 may be a USB connector, and a signal line of the USB connector may be defined as a USB data positive signal line (that is, a D+ signal line) and a USB data negative signal line (that is, a D- signal line). This enables communication between the D+/D-signal lines of the charging interface and the D+/D- signal lines of the charging connector, information exchange between the electronic device 100 and the charger 200 can be implemented, and a charging process of the electronic device 100 can be implemented.

Exemplarily, for a universal fast charging specification (Universal Fast Charging Specification, UFCS), a standard universal asynchronous receiver/transmitter (Universal Asynchronous Receiver/Transmitter, UART) serial port data format may be performed based on the D+/D- signal lines of the charging interface, and a handshake process thereof may be a handshake manner combining of a level pulse sequence and serial port data ping, so as to implement a fast charging process corresponding to the UFCS. For a private fast charging protocol of some manufacturers, the standard UART serial port data format may also be performed based on a level sequence of the D+/D- signal lines and a private handshake instruction corresponding to the private fast charging protocol, so as to implement a fast charging process corresponding to the private fast charging protocol.

The following describes a charging method provided in the embodiments of this application in detail with reference to the accompanying drawings and through specific embodiments and application scenarios thereof.

Referring to FIG. 2, FIG. 2 is a flowchart I of a charging method according to an embodiment of this application. The charging method provided in this embodiment of this application may be applied to an electronic device. As shown in FIG. 2, the charging method includes the following steps:
Step 201: In a process of detecting, based on a target voltage level sequence, whether a charger supports a first fast charging protocol, when a first signal line of a charging interface of the electronic device is at a high level, configure the first signal line as a receive signal line in a universal asynchronous receiver/transmitter UART serial port mode, and configure a second signal line of the charging interface as a transmit signal line in the UART serial port mode.

In this step, the target voltage level sequence may be a level sequence corresponding to the first fast charging protocol, that is, whether the charger supports the first fast charging protocol can be detected by using the target voltage level sequence. In addition, the first signal line is configured as the receive signal line in the UART serial port mode, and the second signal line of the charging interface is configured as the transmit signal line in the UART serial port mode, so that efficiency of data exchange between the electronic device and the charger can be improved.

The first fast charging protocol may be the UFCS, or may be a private fast charging protocol of some manufacturers, such as an adaptive fast charging (Adaptive Fast Charging, AFC) and a fast charger protocol (Fast Charger Protocol, FCP).

When the first fast charging protocol is the UFCS, whether the charger supports the UFCS may be detected by using a level sequence of the UFCS, that is, the target voltage level sequence may be the level sequence of the UFCS.

Exemplarily, when the charging interface is a USB interface, the first signal line may be defined as a D+ signal line, and the second signal line may be defined as a D- signal line. In the process of detecting, by using the level sequence of the UFCS, whether the charger supports the UFCS, wait for the D+ signal line to reach a high level when a pulse sequence corresponding to the D- signal line outputting a high level for a time T1, the D- signal line outputting a low level for a time T2, the D- signal line outputting a high level for a time T3, and the D- signal line outputting a low level for a time T4 is detected.

In a normal case, the D+ signal line is pulled high to a high level by using the charger. However, when the D+ signal line cannot be pulled high to a high level by using the charger, the D+ signal line may be actively pulled high to a high level by using the electronic device. In this way, after the D+ signal line is at the high level, the D+ signal line can be configured as a receive signal line in the UART serial port mode, and the D- signal line can be configured as a transmit signal line in the UART serial port mode, so as to improve efficiency of data exchange between the electronic device and the charger.

It may be understood that the high level and the low level in this application are mainly used for characterizing level states of a signal line. For example, the high level may refer to a high signal or a high voltage. The low level may refer to zero voltage or a low potential.

Optionally, before step 201, whether a charging connector of the charger is connected to the charging interface of the electronic device may be detected, and when it is detected that the charging connector is connected to the charging interface, a type of the charger may be identified, to identify whether the charger is a fast-charging charger, and when it is identified that the charger is a fast-charging charger, step 201 is performed.

The type of the charger may be identified by using Battery Charging v1.2 (Battery Charging v1.2, BC1.2).

Step 202: Perform, when a first data packet supporting a second fast charging protocol is received from the charger within a first duration, charging according to the second fast charging protocol.

In this step, the first data packet may be understood as a handshake data packet that supports the second fast charging protocol and is initiated by the charger. If the first data packet sent by the charger is received within the first duration, fast charging is performed according to the second fast charging protocol, to enable fast charging of the electronic device.

Step 203: Perform charging according to the first fast charging protocol when the first data packet is not received within the first duration.

In this step, when the first data packet is not received within the first duration, charging is performed according to the first fast charging protocol, to enable fast charging of the electronic device.

In this way, the charger sends handshake data of the second fast charging protocol during a handshake sequence of the first fast charging protocol, specifically within the first duration after the first signal line of the charging interface is at the high level, so that the electronic device performs charging according to the second fast charging protocol after receiving the corresponding first data packet, enabling a handshake communication of the second fast charging protocol to be compatible with the first fast charging protocol during the handshake sequence process of the first fast charging protocol, that is, a single sequence process compatible with two fast charging protocols, so as to implement compatibility between the first fast charging protocol and the second fast charging protocol, thereby effectively improving compatibility of the electronic device with different fast charging protocols.

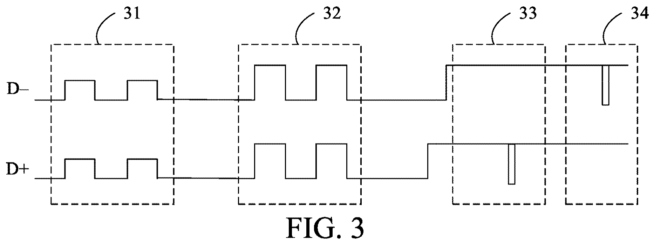

Referring to FIG. 3, FIG. 3 is a handshake sequence diagram of a charging method according to an embodiment of this application. As shown in FIG. 3, the handshake sequence diagram includes a first sequence frame 31, a second sequence frame 32, a third sequence frame 33, and a fourth sequence frame 34. The first sequence frame 31 may be used for characterizing an identification sequence of charger type. The second sequence frame 32 may be used for characterizing whether the charger supports a level detection sequence of the first fast charging protocol. The third sequence frame 33 may be used for characterizing a handshake sequence corresponding to the second fast charging protocol. The fourth sequence frame 34 may be used for characterizing a handshake sequence corresponding to the first fast charging protocol.

In this way, the handshake sequence of the second fast charging protocol and the handshake sequence of the first fast charging protocol are integrated, so that a single sequence process is compatible with two fast charging protocols, thereby effectively improving compatibility of the electronic device with different fast charging protocols.

Optionally, the performing charging according to the first fast charging protocol when the first data packet is not received within the first duration includes:
sending a second data packet that supports the first fast charging protocol to the charger when the first data packet is not received within the first duration; and
performing charging according to the first fast charging protocol when response information for the second data packet is received from the charger.

In this implementation, the second data packet may be understood as a handshake data packet that supports the first fast charging protocol and is sent by the electronic device to the charger, so as to perform charging according to the first fast charging protocol when response information for the second data packet is received from the charger, to enable fast charging of the electronic device.

When the charger receives the second data packet that supports the first fast charging protocol and is sent by the electronic device, the charger may send response information to the electronic device by using the first signal line. The response information is used for characterizing that the charger receives the second data packet that supports the first fast charging protocol and is sent by the electronic device. When receiving the response information sent by the charger, the electronic device may determine that the charger receives the second data packet, so as to perform charging according to the first fast charging protocol.

In some implementations, the first data packet may be transmitted based on the first signal line, the second data packet may be transmitted based on the second signal line, and the first signal line and the second signal line are different physical signal lines on the charging interface.

Exemplarily, wait for, within the first duration, whether the charger initiates a handshake data packet of the second fast charging protocol on the first signal line (the D+ signal line) and a handshake data packet of the first fast charging protocol may be sent to the charger on the second signal line (the D- signal line). In this way, the handshake data packet of the second fast charging protocol is transmitted by using the first signal line, and the handshake data packet of the first fast charging protocol is transmitted by using the second signal line, that is, the handshake data packets of the two protocols are defined on two different physical buses, thereby effectively preventing conflicts of the handshake data packets and improving a fast charging process of the electronic device.

It may be understood that, after the first signal line is configured as the receive signal line in the UART serial port mode and the second signal line is configured as the transmit signal line in the UART serial port mode, the handshake data packet of the first fast charging protocol and the handshake data packet of the second fast charging protocol can be received/transmitted based on a UART serial port mode, to prevent conflicts of the handshake data packets.

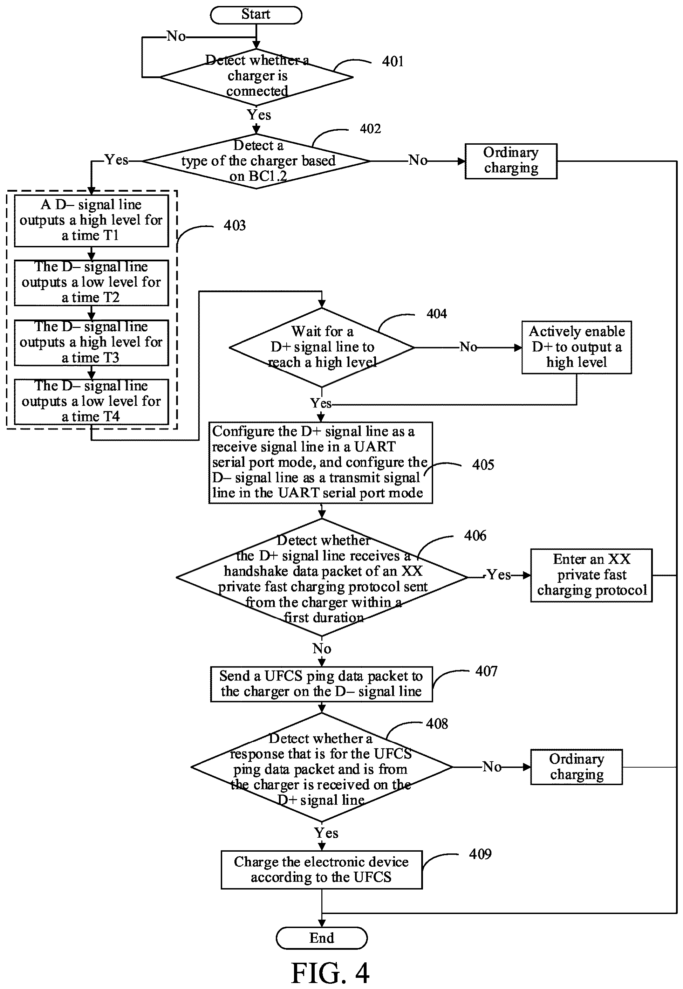

Referring to FIG. 4, FIG. 4 is a flowchart II of a charging method according to an embodiment of this application. As shown in FIG. 4, the charging method is applied to an electronic device. Moreover, in this implementation, the first fast charging protocol may be a UFCS, and the second fast charging protocol may be an XX private fast charging protocol, so as to specifically describe the charging method. The charging method provided in this embodiment specifically includes the following steps:
Step 401: Detect whether a charger is connected.
Step 402 is performed if it is detected that the charger is plugged in. The process is ended or step 401 is continued if it is not detected that the charger is plugged in.
Step 402: Detect a type of the charger based on BC1.2.
Step 403 is performed if it is detected that the charger is a fast-charging charger. The electronic device is charged according to an ordinary charging mode if it is detected that the charger is an ordinary charger.
Step 403: Detect whether a pulse sequence satisfies a D- signal line outputting a high level for a time T1, the D- signal line outputting a low level for a time T2, the D- signal line outputting a high level for a time T3, and the D- signal line outputting a low level for a time T4.
Step 404: Wait for the D+ signal line to reach a high level.
Step 405 is performed if the D+ signal line is directly pulled high to a high level by using the charger. The D+ signal line is actively pulled high to a high level by using the electronic device if the D+ signal line fails to be directly pulled high to a high level by using the charger. For example, when the electronic device is a mobile phone, the D+ signal line may be actively pulled high to a high level by using the mobile phone.
Step 405: Configure the D+ signal line as a receive signal line in a UART serial port mode, and configure the D- signal line as a transmit signal line in the UART serial port mode.

In this case, both the D+/D- signal lines are at high levels.

Step 406: Detect whether the D+ signal line receives a handshake data packet of an XX private fast charging protocol sent from the charger within a first duration.

The electronic device is charged according to the XX private fast charging protocol if the handshake data packet of the XX private fast charging protocol is received. Step 407 is performed if the handshake data packet of the XX private fast charging protocol is not received.

Step 407: Send a UFCS ping data packet to the charger on the D- signal line.

Step 408: Detect whether a response that is for the UFCS ping data packet and is from the charger is received on the D+ signal line.

Step 409 is performed if the response is received. The electronic device is charged according to the ordinary charging mode if the response is not received.

Step 409: Charge the electronic device according to the UFCS.

Optionally, the method further includes:
polling, based on historical charging records of the electronic device, at least two historical fast charging protocols corresponding to the historical charging records in a cyclic traversal manner when the electronic device is connected to the charger; and
performing, when a target fast charging protocol among the at least two historical fast charging protocols successfully completes a handshake during the polling process, charging according to the target fast charging protocol;
where a polling order for the at least two historical fast charging protocols during the polling process is related to the historical charging records.

In this implementation, at least two historical fast charging protocols supported by the electronic device may be determined based on the historical charging records of the electronic device, so as to perform a polling handshake for the charger by using the at least two historical fast charging protocols, and when a target fast charging protocol among the at least two historical fast charging protocols successfully completes a handshake, charging is performed according to the target fast charging protocol, to improve efficiency of the successful handshake between the electronic device and the charger.

A polling order for the at least two historical fast charging protocols is related to the historical charging records. Moreover, handshake times corresponding to the at least two historical fast charging protocols are both less than a target threshold. In this way, in a process of polling the at least two historical fast charging protocols, since the handshake time of each historical fast charging protocol is less than the target threshold, each fast charging protocol has a plurality of opportunities to attempt handshaking, thereby effectively preventing a situation in which a fast charging protocol always monopolizes time.

In some implementations, the target threshold may be understood as a minimum handshake duration. For example, in a conventional handshake process, a handshake attempt time of each protocol may reach tens of seconds or even minutes, and another fast charging protocol is attempted only when the handshake times out. However, in this application, a handshake attempt duration of each fast charging protocol is set to a value less than the target threshold. The target threshold is much less than tens of seconds, for example, 1 s. Therefore, each fast charging protocol has a plurality of opportunities to attempt handshaking, thereby effectively preventing a situation in which a fast charging protocol always monopolizes time.

Exemplarily, when the at least two historical fast charging protocols include a first fast charging protocol, a second fast charging protocol, and a third fast charging protocol and based on the historical charging records, a polling order for the first fast charging protocol, the second fast charging protocol, and the third fast charging protocol is the first fast charging protocol, the third fast charging protocol, and the second fast charging protocol, the first fast charging protocol, the second fast charging protocol, and the third fast charging protocol may be numbered and sorted to obtain a corresponding number sorting relationship, and the number sorting relationship may be specifically expressed as 1. the first fast charging protocol, 2. the third fast charging protocol, and 3. the second fast charging protocol. That is, a number corresponding to the first fast charging protocol is 1, a number corresponding to the third fast charging protocol is 2, and a number corresponding to the second fast charging protocol is 3.

When it is detected that the electronic device is electrically connected to the charger, a protocol handshake based on the first fast charging protocol may be first attempted within a second duration. Charging is performed directly according to the first fast charging protocol when the protocol handshake based on the first fast charging protocol succeeds within the second duration. A protocol handshake based on the third fast charging protocol is attempted in a new time cycle (that is, the second duration) if the protocol handshake based on the first fast charging protocol fails within the second duration. Charging is performed directly according to the third fast charging protocol when the protocol handshake based on the third fast charging protocol succeeds within the second duration. A protocol handshake based on the second fast charging protocol is attempted in a new time cycle (that is, the second duration) if the protocol handshake based on the third fast charging protocol fails within the second duration. Charging is performed directly according to the second fast charging protocol when the protocol handshake based on the second fast charging protocol succeeds within the second duration. A protocol handshake based on the first fast charging protocol is continuously attempted in a new time cycle (that is, the second duration) if the protocol handshake based on the second fast charging protocol fails within the second duration.

In this way, each fast charging protocol attempts a protocol handshake only for the second duration. For example, the target threshold is set to 1 second. That is, each fast charging protocol attempts a protocol handshake only for 1 second, and switches to another fast charging protocol after 1 second. In this way, all fast charging protocols can be continuously cyclically switched, each fast charging protocol has a plurality of opportunities to attempt protocol handshaking, and a situation in which a fast charging protocol always monopolizes time may not occur, which effectively improves efficiency of successful handshakes between the electronic device and the charger.

Further optionally, after the performing charging according to the target fast charging protocol, the method further includes:
updating the historical charging records based on the target fast charging protocol.

In this embodiment, after the successful handshake between the target fast charging protocol and the charger, the historical charging records may be updated based on the target fast charging protocol, so as to improve handshake efficiency.

Exemplarily, the number sorting relationship may be updated based on number information of the target fast charging protocol in the number sorting relationship, so that during next charging with the charger, a protocol handshake may be performed on the charger and a target fast charging protocol that ranks first in the updated number sorting relationship, thereby accelerating a handshake process between the electronic device and the charger and improving a success rate of the handshake.

For example, when the target fast charging protocol is the third fast charging protocol, the updated number sorting relationship is as follows: 1. the third fast charging protocol, 2. the second fast charging protocol, and 3. the first fast charging protocol. That is, when new handshake polling is performed based on the updated number sorting relationship, the protocol handshake is first performed with the charger based on the third fast charging protocol that ranks first. For the number sorting relationship before updating, the protocol handshake is first performed with the charger based on the first fast charging protocol that ranks first.

In this way, for a same charger, provided that the user has used the charger once, when the charger is plugged in for the second time, the charger may fast perform a handshake to a corresponding fast charging protocol, thereby improving handshake efficiency.

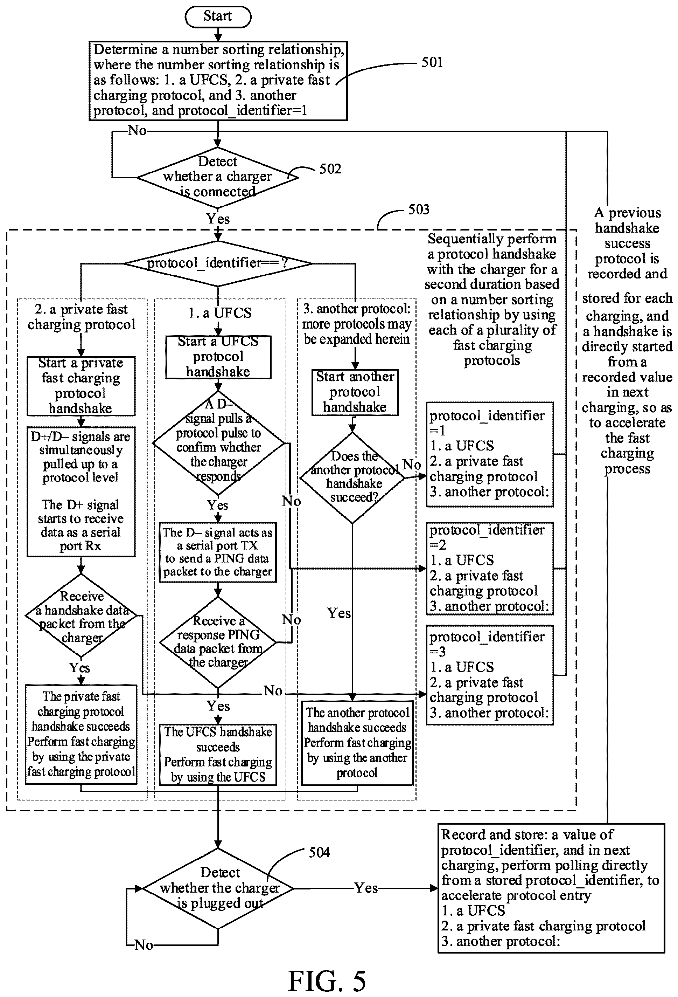

Referring to FIG. 5, FIG. 5 is a flowchart III of a charging method according to an embodiment of this application. As shown in FIG. 5, the charging method may be applied to an electronic device. The electronic device supports a plurality of fast charging protocols. Moreover, the plurality of fast charging protocols supported by the electronic device are numbered and sorted, and a corresponding number sorting relationship is obtained. The number sorting relationship in this embodiment may be 1. a UFCS, 2. a private fast charging protocol, and 3. another protocol.

The charging method specifically includes the following steps:
Step 501: Determine a number sorting relationship, where the number sorting relationship is: 1. a UFCS, 2. a private fast charging protocol, and 3. another protocol, and protocol_identifier=1.
protocol_identifier=1 indicates that the UFCS numbered 1 in the number sorting relationship is a first fast charging protocol among all fast charging protocols in the number sorting relationship that performs a protocol handshake with the charger.
Step 502: Detect whether a charger is plugged in.
Step 503 is performed if it is detected that the charger is plugged in. The process is ended or step 502 is continued if it is not detected that the charger is plugged in.
Step 503: Sequentially perform a protocol handshake with the charger for a second duration based on a number sorting relationship by using each of a plurality of fast charging protocols.

When protocol_identifier=1, a UFCS protocol handshake is started, and then a D-signal pulls a protocol pulse to confirm whether the charger responds. If the charger responds, the D- signal acts as a serial port TX to send a PING data packet to the charger. Moreover, after a response PING data packet from the charger is received, it is determined that a UFCS handshake has succeeded and fast charging is performed by using the UFCS. If the charger does not respond, protocol_identifier=1 is updated to protocol_identifier=2. In addition, if the response PING data packet from the charger is not received, protocol_identifier=1 is also updated to protocol_identifier=2.

After protocol_identifier=1 is updated to protocol_identifier=2, the private fast charging protocol handshake is started, and then D+/D- signals are simultaneously pulled up to a protocol level. The D+ signal starts to receive data as a serial port Rx. It is detected whether a handshake data packet sent by the charger is received. If the handshake data packet is received, it is determined that the private fast charging protocol handshake succeeds, and fast charging is performed by using the private fast charging protocol. If the handshake data packet is not received, protocol_identifier=2 is updated to protocol_identifier=3.

After protocol_identifier=2 is updated to protocol_identifier=3, another protocol handshake is started. Then, it is detected whether the another protocol handshake succeeds. Fast charging is performed by using the another protocol if the another protocol handshake succeeds. protocol_identifier=3 is updated to protocol_identifier=1 if the another protocol handshake fails. A next cycle is started, that is, the UFCS protocol handshake is restarted.

Step 504: Detect whether the charger is plugged out.

The number sorting relationship is updated based on a fast charging record if it is detected that the charger is plugged out. Detection is continued or the process is ended if it is not detected that the charger is plugged out.

In next charging, polling may be performed directly from a stored protocol_identifier, to accelerate protocol entry. In this way, a previous handshake success protocol is recorded and stored for each charging, and a handshake is directly started from a recorded value in next charging, so as to accelerate the fast charging process.

In some implementations, based on a charging behavior of a user, a charger used in a period of time is basically fixed. In this case, various protocols are continuously circularly polled and attempted in a minimum time slice, and a protocol number after a successful handshake is learned and stored by an electronic device such as a mobile phone end. After the user subsequently plugs in the charger, a fast charging handshake may be performed by directly using the stored protocol number, so as to accelerate the fast charging process and improve user experience.

According to the charging method in this embodiment of this application, in the process of detecting, based on the target voltage level sequence, whether the charger supports the first fast charging protocol, when the first signal line of the charging interface of the electronic device is at a high level, the first signal line is configured as the receive signal line in the universal asynchronous receiver/transmitter UART serial port mode, and the second signal line of the charging interface is configured as the transmit signal line in the UART serial port mode. When the first data packet that supports the second fast charging protocol and is sent by the charger is received within the first duration, charging is performed according to the second fast charging protocol. Charging is performed according to the first fast charging protocol when the first data packet is not received within the first duration. In this way, compatibility of the electronic device with different fast charging protocols can be effectively improved.

The charging method provided in this embodiment of this application may be performed by a charging apparatus. In embodiments of this application, the charging apparatus provided in the embodiments of this application is described based on an example in which the charging apparatus performs the charging method.

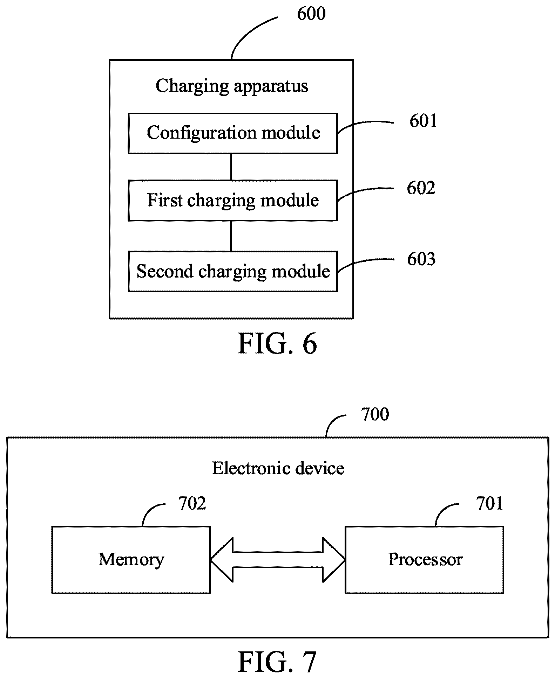

Referring to FIG. 6, FIG. 6 is a structural diagram of a charging apparatus according to an embodiment of this application. As shown in FIG. 6, the charging apparatus 600 includes:
a configuration module 601, configured to, in a process of detecting, based on a target voltage level sequence, whether a charger supports a first fast charging protocol, when a first signal line of a charging interface of the electronic device is at a high level, configure the first signal line as a receive signal line in a universal asynchronous receiver/transmitter UART serial port mode, and configure a second signal line of the charging interface as a transmit signal line in the UART serial port mode;
a first charging module 602, configured to perform, when a first data packet supporting a second fast charging protocol is received from the charger within a first duration, charging according to the second fast charging protocol; and
a second charging module 603, configured to perform charging according to the first fast charging protocol when the first data packet is not received within the first duration.

Optionally, the second charging module 603 is specifically configured to send a second data packet that supports the first fast charging protocol to the charger when the first data packet is not received within the first duration; and is configured to perform charging according to the first fast charging protocol when response information for the second data packet is received from the charger.

Optionally, the first data packet is transmitted based on the first signal line, and the second data packet is transmitted based on the second signal line.

Optionally, the apparatus 600 further includes:
a polling module, configured to poll, based on historical charging records of the electronic device, at least two historical fast charging protocols corresponding to the historical charging records in a cyclic traversal manner when the electronic device is connected to the charger; and
a third charging module, configured to perform, when a target fast charging protocol among the at least two historical fast charging protocols successfully completes a handshake during the polling process, charging according to the target fast charging protocol;
where a polling order for the at least two historical fast charging protocols during the polling process is related to the historical charging records.

Optionally, the apparatus 600 further includes:
an update module, configured to update the historical charging records based on the target fast charging protocol.

Optionally, during the polling process, handshake times corresponding to the at least two historical fast charging protocols are both less than a target threshold.

Optionally, the first fast charging protocol is a universal fast charging specification UFCS.

The charging apparatus in this embodiment of this application may be an electronic device, or a component in an electronic device, such as an integrated circuit or a chip. The electronic device may be a terminal, or may be another device other than a terminal. Exemplarily, the electronic device may be a mobile phone, a tablet computer, a notebook computer, a palmtop computer, a vehicle-mounted electronic device, a mobile Internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, or a personal digital assistant (personal digital assistant, PDA), or may be a network attached storage (Network Attached Storage, NAS), a personal computer (personal computer, PC), a television (Television, TV), a teller machine, or a self-service machine, which is not specifically limited in this embodiment of this application.

The charging apparatus in this embodiment of this application may be an apparatus with an operating system. The operating system may be an Android (Android) operating system, an iPhone operating system (iPhone Operating System, iOS), or another possible operating system, which is not specifically limited in this embodiment of this application.

The charging apparatus provided in this embodiment of this application can implement the processes implemented in the method embodiments in FIG. 2 to FIG. 5 and achieve same technical effects. To avoid repetition, details are not described herein again.

Optionally, as shown in FIG. 7, an embodiment of this application further provides an electronic device 700, including a processor 701 and a memory 702. The memory 702 has a program or an instruction executable on the processor 701 stored therein. When the program or the instruction is executed by the processor 701, the steps of the foregoing charging method embodiments are implemented, and the same technical effects can be achieved. To avoid repetition, details are not described herein again.

It should be noted that the electronic device in this embodiment of this application includes mobile electronic devices and non-mobile electronic devices described above.

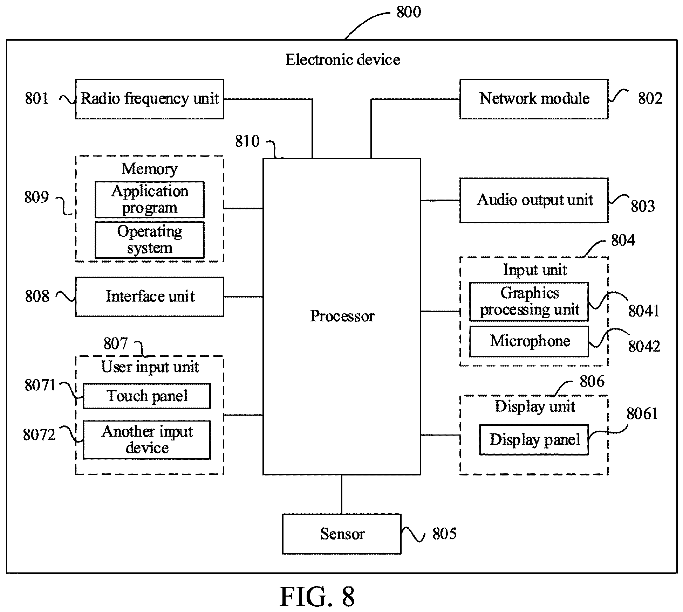

Referring to FIG. 8, FIG. 8 is a structural diagram of an electronic device according to an embodiment of this application. As shown in FIG. 8, the electronic device 800 includes, but is not limited to, components such as a radio frequency unit 801, a network module 802, an audio output unit 803, an input unit 804, a sensor 805, a display unit 806, a user input unit 807, an interface unit 808, a memory 809, and a processor 810.

A person skilled in the art may understand that the electronic device 800 may further include a power supply (such as a battery) for supplying power to the components. The power supply may be logically connected to the processor 810 by using a power management system, to implement functions such as charging, discharging, and power consumption management by using the power management system. The structure of the electronic device shown in FIG. 8 does not constitute a limitation on the electronic device, and the electronic device may include more or fewer components than shown, or combine some components, or have different component arrangements. Details are not described herein again.

The processor 810 is configured to, in a process of detecting, based on a target voltage level sequence, whether a charger supports a first fast charging protocol, when a first signal line of a charging interface of the electronic device is at a high level, configure the first signal line as a receive signal line in a universal asynchronous receiver/transmitter UART serial port mode, and configure a second signal line of the charging interface as a transmit signal line in the UART serial port mode; is configured to perform, when the first data packet that supports a second fast charging protocol and is sent by the charger is received within the first duration, charging according to the second fast charging protocol; and is configured to perform charging according to the first fast charging protocol when the first data packet is not received within the first duration.

Optionally, the interface unit 808 is configured to send a second data packet that supports the first fast charging protocol to the charger when the first data packet is not received within the first duration; and the processor 810 is configured to perform charging according to the first fast charging protocol when response information for the second data packet is received from the charger.

Optionally, the first data packet is transmitted based on the first signal line, and the second data packet is transmitted based on the second signal line.

Optionally, the processor 810 is configured to poll, based on historical charging records of the electronic device, at least two historical fast charging protocols corresponding to the historical charging records in a cyclic traversal manner when the electronic device is connected to the charger; and is configured to perform, when a target fast charging protocol among the at least two historical fast charging protocols successfully completes a handshake during the polling process, charging according to the target fast charging protocol; where a polling order for the at least two historical fast charging protocols during the polling process is related to the historical charging records.

Optionally, the processor 810 is configured to update the historical charging records based on the target fast charging protocol.

Optionally, handshake times corresponding to the at least two historical fast charging protocols are both less than a target threshold.

Optionally, the first fast charging protocol is a universal fast charging specification UFCS.

It should be understood that, in this embodiment of this application, the input unit 804 may include a graphics processing unit (Graphics Processing Unit, GPU) 8041 and a microphone 8042, and the graphics processing unit 8041 processes image data of a still picture or a video obtained by an image capture apparatus (such as a camera) in a video capture mode or an image capture mode. The display unit 806 may include a display panel 8061. The display panel 8061 may be configured in a form of a liquid crystal display, an organic light-emitting diode, or the like. The user input unit 807 includes at least one of a touch panel 8071 and another input device 8072. The touch panel 8071 is also referred to as a touchscreen. The touch panel 8071 may include two parts: a touch detection apparatus and a touch controller. The another input device 8072 may include, but is not limited to, a physical keyboard, functional keys (such as a volume control key and a switch key), a track ball, a mouse, and a joystick. Details are not described herein again.

The memory 809 may be configured to store a software program and various data. The memory 809 may mainly include a first storage area storing a program or an instruction and a second storage area storing data, where the first storage area may store an operating system, an application program or an instruction required by at least one function (such as a sound playback function or an image display function) and the like. In addition, the memory 809 may include a volatile memory or a non-volatile memory, or the memory 809 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 809 in this embodiment of this application includes, but is not limited to, these memories and any other suitable types of memories.

The processor 810 may include one or more processing units. Optionally, the processor 810 integrates an application processor and a modem. The application processor mainly processes operations related to an operating system, a user interface, an application program, and the like. The modem mainly processes a wireless communication signal, such as a baseband processor. It may be understood that the foregoing modem may not be integrated into the processor 810.

An embodiment of this application further provides a readable storage medium. The readable storage medium has a program or an instruction stored therein. The processes of the foregoing charging method embodiments are implemented when the program or the instruction is executed by a processor, and same technical effects can be achieved. To avoid repetition, details are not described herein again.

The processor is the processor in the electronic device in the foregoing embodiments. The readable storage medium includes a computer-readable storage medium, for example, a computer read-only memory ROM, a random access memory RAM, a magnetic disk, an optical disk, and the like.

An embodiment of this application additionally provides a chip. The chip includes a processor and a communication interface. The communication interface is coupled to the processor, the processor is configured to execute a program or an instruction to implement the processes of the foregoing charging method embodiments, and the same technical effects can be achieved. To avoid repetition, details are not described herein again.

It should be understood that, the chip provided in this embodiment of this application may also be referred to as a system-level chip, a system chip, a chip system, a system on chip, or the like.

An embodiment of this application provides a computer program product. The program product is stored in a storage medium. The program product is executed by at least one processor to implement the processes of the foregoing charging method embodiments, and can achieve same technical effects. To avoid repetition, details are not described herein again.

It should be noted that the terms "include", "comprise", or any other variations thereof in this specification are intended to cover a non-exclusive inclusion, such that a process, method, article, or apparatus including a series of elements not only includes those elements, but also includes other elements that are not explicitly listed, or also includes elements inherent to such a process, method, article, or apparatus. Without more restrictions, an element defined by the sentence "including/comprising a/an ..." does not exclude existence of other identical elements in the process, the method, the article, or the apparatus including the element. Moreover, it should be noted that the scope of the method and the apparatus in the embodiments of this application is not limited to executing the functions in the order shown or discussed, but may include executing the functions in a substantially concurrent manner or in a reverse order depending on the related functions. For example, the method described may be performed in an order different from that described, and various steps may be further added, omitted, or combined. Moreover, features described with reference to some examples may be combined in other examples.

According to the descriptions in the foregoing implementations, a person skilled in the art may clearly learn that the method in the foregoing embodiments may be implemented by software plus a necessary general hardware platform, or by hardware, but in many cases the former is preferred. Based on such understanding, the technical solution of this application, in essence or from the view of part contributing to the related art, may be embodied in a form of a computer software product. The computer software product is stored in a storage medium (such as a ROM/RAM, a magnetic disk, or an optical disk) and includes several instructions used for causing a terminal (which may be a mobile phone, a computer, a server, a network device, or the like) to execute the method in the embodiments of this application.

The embodiments of this application are described above with reference to the accompanying drawings. However, this application is not limited to the foregoing specific implementations. The foregoing specific implementations are only illustrative rather than restrictive. Inspired by this application, a person of ordinary skill in the art can still derive a plurality of variations without departing from the essence of this application and the protection scope of the claims. All these variations shall fall within the protection of this application.

## Claims

1. A charging method, applied to an electronic device, the method comprising:
in a process of detecting, based on a target voltage level sequence, whether a charger supports a first fast charging protocol, when a first signal line of a charging interface of the electronic device is at a high level, configuring the first signal line as a receive signal line in a universal asynchronous receiver/transmitter UART serial port mode, and configuring a second signal line of the charging interface as a transmit signal line in the UART serial port mode;
performing, when a first data packet supporting a second fast charging protocol is received from the charger within a first duration, charging according to the second fast charging protocol; and
performing charging according to the first fast charging protocol when the first data packet is not received within the first duration.

2. The method according to claim 1, wherein the performing charging according to the first fast charging protocol when the first data packet is not received within the first duration comprises:
sending a second data packet that supports the first fast charging protocol to the charger when the first data packet is not received within the first duration; and
performing charging according to the first fast charging protocol when response information for the second data packet is received from the charger.

3. The method according to claim 2, wherein the first data packet is transmitted based on the first signal line, and the second data packet is transmitted based on the second signal line.

4. The method according to any one of claims 1 to 3, further comprising:
polling, based on historical charging records of the electronic device, at least two historical fast charging protocols corresponding to the historical charging records in a cyclic traversal manner when the electronic device is connected to the charger; and
performing, when a target fast charging protocol among the at least two historical fast charging protocols successfully completes a handshake during the polling process, charging according to the target fast charging protocol;
where a polling order for the at least two historical fast charging protocols during the polling process is related to the historical charging records.

5. The method according to claim 4, wherein after the performing charging according to the target fast charging protocol, the method further comprises:
updating the historical charging records based on the target fast charging protocol.

6. The method according to claim 4, wherein during the polling process, handshake times corresponding to the at least two historical fast charging protocols are both less than a target threshold.

7. The method according to any one of claims 1 to 3, wherein the first fast charging protocol is a universal fast charging specification UFCS.

8. A charging apparatus, applied to an electronic device, the apparatus comprising:
a configuration module, configured to, in a process of detecting, based on a target voltage level sequence, whether a charger supports a first fast charging protocol, when a first signal line of a charging interface of the electronic device is at a high level, configure the first signal line as a receive signal line in a universal asynchronous receiver/transmitter UART serial port mode, and configure a second signal line of the charging interface as a transmit signal line in the UART serial port mode;
a first charging module, configured to perform, when a first data packet supporting a second fast charging protocol is received from the charger within a first duration, charging according to the second fast charging protocol; and
a second charging module, configured to perform charging according to the first fast charging protocol when the first data packet is not received within the first duration.

9. The apparatus according to claim 8, wherein the second charging module is specifically configured to send a second data packet that supports the first fast charging protocol to the charger when the first data packet is not received within the first duration; and is configured to perform charging according to the first fast charging protocol when response information for the second data packet is received from the charger.

10. The apparatus according to claim 9, wherein the first data packet is transmitted based on the first signal line, and the second data packet is transmitted based on the second signal line.

11. The apparatus according to any one of claims 8 to 10, further comprising:
a polling module, configured to poll, based on historical charging records of the electronic device, at least two historical fast charging protocols corresponding to the historical charging records in a cyclic traversal manner when the electronic device is connected to the charger; and
a third charging module, configured to perform, when a target fast charging protocol among the at least two historical fast charging protocols successfully completes a handshake during the polling process, charging according to the target fast charging protocol;
where a polling order for the at least two historical fast charging protocols during the polling process is related to the historical charging records.

12. The apparatus according to claim 11, further comprising:
an update module, configured to update the historical charging records based on the target fast charging protocol.

13. The apparatus according to claim 11, wherein during the polling process, handshake times corresponding to the at least two historical fast charging protocols are both less than a target threshold.

14. The apparatus according to any one of claims 8 to 10, wherein the first fast charging protocol is a universal fast charging specification UFCS.

15. An electronic device, comprising a processor and a memory, the memory having a program or an instruction executable on the processor stored therein, and when the program or the instruction is executed by the processor, steps of the charging method according to any one of claims 1 to 7 being implemented.

16. A readable storage medium, the readable storage medium having a program or an instruction stored therein, and when the program or the instruction is executed by a processor, steps of the charging method according to any one of claims 1 to 7 being implemented.

17. A chip, the chip comprising a processor and a communication interface, the communication interface being coupled to the processor, and the processor being configured to execute a program or an instruction, to implement the method according to any one of claims 1 to 7.

18. A computer program product, the program product being stored in a non-volatile storage medium, and the program product being executed by at least one processor to implement the method according to any one of claims 1 to 7.

19. An electronic device, configured to be used to perform the method according to any one of claims 1 to 7.
